# EUROPÄISCHE PATENTSCHRIFT

(11) **EP 3 074 227 B1**
(45) Veröffentlichungstag und Bekanntmachung des Hinweises auf die Patenterteilung: **25.12.2019**
(21) Anmeldenummer: 14808837.0
(22) Anmeldetag: 26.11.2014
(51) Int. Cl.: B32B 27/08, B32B 27/30, B32B 33/00

(54) **MEHRSCHICHTIGER VERBUNDKÖRPER**
MULTILAYER COMPOSITE
CORPS COMPOSITE MULTICOUCHES

(30) Priorität: 29.11.2013 DE 202013105454 U
(43) Veröffentlichungstag der Anmeldung: 05.10.2016
(73) Patentinhaber: REHAU AG + Co, 95111 Rehau (DE)
(72) Erfinder: ENGELBRECHT, Thorsten, 95502 Himmelkron (DE); MEHNERT, Hans Peter, 95126 Schwarzenbach/Saale (DE); BRENDEL, Tobias, 08527 Plauen (DE)
(86) Internationale Anmeldenummer: PCT/EP2014/003160
(87) Internationale Veröffentlichungsnummer: WO 2015/078583

(56) Entgegenhaltungen:
- US-A1- 2002 058 144

## Beschreibung

Die Erfindung betrifft einen mehrschichtigen Verbundkörper, umfassend eine erste polymere Verbundplatte mit einer oberen Schicht, einer Zwischenschicht sowie einer unteren Schicht, einer zweiten polymeren Verbundplatte mit einer ersten Schicht, einer zweiten Schicht sowie einer dritten Schicht.

Derartige mehrschichtige Verbundkörper sind aus dem Stand der Technik bekannt. So beschreibt beispielsweise die DE 2 730 899 einen mehrschichtigen Verbundkörper aus einer vorzugsweise 50 bis 100 µm dicken transparenten Deckschicht und einer Trägerschicht, wobei die Deckschicht aus Polycarbonat, einem niedrig schmelzenden thermoplastischen Polyester, einem transparenten ABS-Polymerisat oder PMMA besteht, die Trägerschicht vorzugsweise mehr als ca. 500 µm dick und aus Polyvinylchlorid oder einem Styrolpolymerisat, vorzugsweise einem schlagzähmodifizierten Polystyrol, aufgebaut ist und die Deckschicht mit der Trägerschicht ggf. über eine oder mehrere Zwischenschichten festhaftend miteinander verbunden ist, wobei die der Deckschicht benachbarte Schicht entweder auf der der Deckschicht zugekehrten Seite dekorativ bedruckt oder geprägt oder eingefärbt und geprägt ist. Die Polycarbonate sind dabei bekannte handelsübliche Materialien, als thermoplastische Polyester dienen vorzugsweise Polybutylenterephthalat und / oder modifiziertes Polybutylenterephthalat. Als ABS-Polymerisate sollen Styrol-Acrylnitril-Copolymerisate eingesetzt werden. Das PMMA ist transparent ausgebildet und kann dabei schlagzäh modifiziert sein.

Das Polyvinylchlorid ist ein Hart-PVC. Als Styrolpolymerisat soll ein schlagzähmodifiziertes Styrolpolymerisat wie beispielsweise ABS- oder ASA-Polymerisate eingesetzt werden, die sich durch eine hohe Schlagzähigkeit auszeichnen. Die Zwischenschichten bestehen aus thermoplastischen Materialien und verbinden die Deckschicht mit der Trägerschicht so fest miteinander, dass auch bei mechanischer Belastung der mehrschichtige Verbundkörper erhalten bleibt. Die Zwischenschichten sind dabei als Folien mit einer Dicke von etwa 30 bis 100 µm hergestellt.

Derartige mehrschichtige Verbundkörper werden beispielsweise auf dem Sanitärsektor verwendet zur Herstellung von Duschwannen, Waschbecken und dergleichen, wobei hier vor allem die Härte, die Kratzfestigkeit und der Glanz der Oberfläche als wichtig eingeschätzt werden und die Möglichkeit, Oberflächenschäden durch Polieren auszubessern, ausgenutzt werden soll. Weiterhin ist dieser mehrschichtige Verbundkörper durch beispielsweise Tiefziehen so zu gestalten, dass sowohl die mechanischen als auch die optischen Eigenschaften des daraus herstellten Badewanneneinsatzes, der Duschwanne und dergleichen nach der Verformung annähernd erhalten bleiben.

Nachteilig bei diesem mehrschichtigen Verbundkörper wird gesehen, dass dessen Herstellung sehr aufwendig und basierend auf den gewählten Materialien sehr kostenintensiv ist. Weiterhin nachteilig wird gesehen, dass der Einsatz dieses mehrschichtigen Verbundkörpers insbesondere in der Möbelindustrie zur Herstellung von Möbelteilen mit einer hochwertigen, flächigen Oberfläche nur bedingt einsetzbar ist. Dies insbesondere durch den komplexen Schichtaufbau dieses mehrschichtigen Verbundkörpers sowie der gewählten Materialkombinationen. Mit dem mehrschichtigen Verbundkörper aus dem Stand der Technik lassen sich keine Oberflächen erzeugen die hochglänzend sind und / oder die mattiert sind.

Ein weiterer mehrschichtiger Verbundkörper ist in der DE 20 2010 013 841 U1 beschrieben. Dieser mehrschichtige Verbundkörper betrifft eine Möbelbauplatte, wobei eine Oberseite eines Trägers aus einem Holz oder Holzersatzstoff mit einer klarsichtigen oder satinierten Kunststoffplatte verklebt ist, das die Kunststoffplatte unterseitig mit einem farbigen Lack versehen ist, das die Kunststoffplatte oberseitig mit einem kratzfesten Klarlack versehen ist und das die Kanten der auf Maß geschnittenen Möbelbauplatte mit einer Kunststoffkante in einer Glasoptik belegt sind. Die Kunststoffplatte soll dabei aus einem Acryl oder aus einem Polycarbonat bestehen und eine Materialstärke von etwa 2 mm bis 4 mm aufweisen. Nachteilig bei diesem mehrschichtigen Verbundkörper wird gesehen, dass die für eine stoffschlüssige Verbindung mit dem Träger aus einem Holz oder Holzersatzstoff absolut eben und plan herzustellen ist, was den Aufwand hierfür immens in die Höhe treibt. Ein weiterer Nachteil dieses mehrschichtigen Verbundkörpers wird darin gesehen, dass bei dem Verkleben der rückseitig mit einem farbigen Lack versehenen Kunststoffplatte auf dem Träger die Lackschicht beschädigt bzw. zerstört wird, so dass die so hergestellte Möbelbauplatte nicht mehr verwendbar ist. Weiterhin nachteilig wird gesehen, dass die Farbstabilität über lange Zeiträume nicht gewährleistet ist und das dieser Verbundkörper insbesondere bei Beanspruchungen durch unterschiedliche Temperaturen frühzeitig versagt.

Die US 2002/0058144 A1 beschreibt einen mehrschichtigen Verbundkörper umfassend eine foliendekorierte Platte, die einstückig an die Oberfläche eines Formharzes gebunden ist, wobei die Platte in der Form eines Laminats vorliegt, die einen transparenten Acrylfilm bestehend aus einem Acrylnitril- Butadien- Styren, einen bindenden oberflächenseitigen Film und eine Dekorschicht, die zwischen dem Acrylfilm und dem bindenden oberflächenseitigen Film beispielsweise durch konventionelle Druckverfahren gebildet ist, aufweist. Der bindende oberflächenseitige Film soll dazu dienen, mit dem Formharz stoffschlüssig verbunden zu werden. Der bindende oberflächenseitige Film und das Formharz umfasst identische Komponentenharze, wobei der bindende oberflächenseitige Film einen Polypropylen- Film oder einen Acrylnitril- Butadien- Styren- Film aufweist.

Weiterhin wird vorgeschlagen, dass zur Verbesserung der Adhäsionseigenschaften zwischen dem Acrylfilm und dem bindenden oberflächenseitigen Film, eine zusätzliche Klebstoffschicht angeordnet ist, welche zwischen der Dekorschicht und dem bindenden oberflächenseitigen Film positioniert ist. Diese kann bestehen aus Polyvinylchlorid- Vinylacetat-Copolymerharzen, aus Acrylharzen oder Urethanharzen.

Hier setzt die Erfindung ein, die sich die Aufgabe gestellt hat, die Nachteile des Standes der Technik zu überwinden und einen mehrschichtigen Verbundkörper aufzuzeigen, der einfach und kostengünstig herstellbar ist, der für den Einsatz insbesondere im Möbelbau mit verschiedenartigen Dekoren und in verschiedenen Glasoptiken zur Verfügung stellbar ist.

Erfindungsgemäß wird diese Aufgabe durch die Merkmale des Anspruches 1 gelöst. Weitere vorteilhafte Ausgestaltungen sind in den Unteransprüchen beschrieben.

Es hat sich überraschend herausgestellt, dass ein mehrschichtiger Verbundkörper, umfassend eine erste Verbundplatte mit einer oberen Schicht, einer Zwischenschicht sowie einer unteren Schicht, einer zweiten Verbundplatte mit einer ersten Schicht, einer zweiten Schicht sowie einer dritten Schicht sich dadurch auszeichnet, dass er eine erste Verbundplatte mit einer oberen Schicht aus wenigstens einem (Meth)acrylatcopolymer, welches einen Längenausdehnungskoeffizient von etwa 7 bis 9,5 x 10⁻⁵ K⁻¹, vorzugsweise 7 bis 9,5 x 10⁻⁵ K⁻¹, gemessen nach ISO 11359 aufweist, einer Zwischenschicht aus wenigstens einem (Meth)acrylatcopolymer, enthaltend Pigmente und/oder Farbstoffe und ggf. Lichtschutzmittel, die aus einem mit der oberen Schicht identischen oder verschiedenen (Meth)acrylatcopolymer besteht mit einem Längenausdehnungskoeffizient von etwa 7 bis 9,5 x 10⁻⁵ K⁻¹, vorzugsweise 7 bis 9,5 x 10⁻⁵ K⁻¹, gemessen nach ISO 11359, einer unteren Schicht, enthaltend Pigmente und/oder Farbstoffe und ggf. Lichtschutzmittel sowie wenigstens ein Styrolpolymer, insbesondere Styrolcopolymer, welches einen Längenausdehnungskoeffizient von etwa 6,5 bis 9,5 x 10⁻⁵ K⁻¹, vorzugsweise 6,5 bis 9,5 x 10⁻⁵ K⁻¹, gemessen nach ISO 11359 aufweist, wobei die erste Verbundplatte eine Gesamtdicke von wenigstens 1 mm und das Material der ersten Verbundplatte einen Längenausdehnungskoeffizient von etwa 5 bis 7 x 10⁻⁵ K⁻¹, vorzugsweise 5 bis 7 x 10⁻⁵ K⁻¹, gemessen nach ISO 11359 aufweist, einer zweiten Verbundplatte mit einer ersten Schicht aus wenigstens einem Styrolpolymer, insbesondere Styrolcopolymer mit einem Längenausdehnungskoeffizient von etwa 6,5 bis 9,5 x 10⁻⁵ K⁻¹, vorzugsweise 6,5 bis 9,5 x 10⁻⁵ K⁻¹, gemessen nach ISO 11359, einer zweiten Schicht aus wenigstens einem Styrolpolymer, insbesondere Styrolcopolymer oder wenigstens einem (Meth)acrylatcopolymer und/oder Mischungen aus diesen mit einem Längenausdehnungskoeffizient von etwa 6,5 bis 9,5 x 10⁻⁵ K⁻¹, vorzugsweise 6,5 bis 9,5 x 10⁻⁵ K⁻¹, gemessen nach ISO 11359, einer dritten Schicht aus wenigstens einem Styrolpolymer, insbesondere Styrolcopolymer mit einem Längenausdehnungskoeffizient von etwa 6,5 bis 9,5 x 10⁻⁵ K⁻¹, vorzugsweise 6,5 bis 9,5 x 10⁻⁵ K⁻¹, gemessen nach ISO 11359 oder wenigstens einem (Meth)acrylatcopolymer mit einem Längenausdehnungskoeffizient von etwa 7 bis 9,5 x 10⁻⁵ K⁻¹, vorzugsweise 7 bis 9,5 x 10⁻⁵ K⁻¹, gemessen nach ISO 11359 aufweist, wobei die zweite Verbundplatte eine Gesamtdicke von wenigstens 1 mm und das Material der zweiten Verbundplatte einen Längenausdehnungskoeffizient von etwa 5 bis 7 x 10⁻⁵ K⁻¹, vorzugsweise 5 bis 7 x 10⁻⁵ K⁻¹, gemessen nach ISO 11359 aufweist, einem zwischen der ersten Verbundplatte und der zweiten Verbundplatte über wenigstens eine Verbindungslage angeordneten Trägerelement, wobei die Verbindungslage wenigstens einen reaktiven Schmelzkleber auf Basis von Polyurethan (PUR) mit einer Auftragsmenge von etwa 30 bis 150 g/m², vorzugsweise 40 bis 80 g/m² aufweist.

Dieser mehrschichtige Verbundkörper kombiniert die Vorteile der oberen Schicht aus einem (Meth)acrylatcopolymer mit einer außerordentlichen Glasoptik mit der darunter angeordneten Zwischenschicht aus einem (Meth)acrylatcopolymer, welche Pigmente und / oder Farbstoffe und ggf. Lichtschutzmittel aufweist und somit eine hohe Farbstabilität aufweist zusätzlich mit einer darunter angeordneten Unterschicht aus einem Styrolpolymer, insbesondere Styrolcopolymer, welches eine hohe Affinität und eine sehr gute Verklebbarkeit mit darunter anzuordnenden Trägern aus beispielsweise Holz oder Holzersatzwerkstoffen oder Holzersatzwerkstoffen aufweist.

Ein weiterer Vorteil des mehrschichtigen Verbundkörpers wird darin gesehen, dass insbesondere bei der Verwendung eines Styrolcopolymer wie beispielsweise Arcylnitril-Butadien Styrol die Planität des gesamten mehrschichtigen Verbundkörpers positiv beeinflusst ist.

Weiterhin kann bei dem mehrschichtigen Verbundkörper durch den gewählten Schichtaufbau über die gesamte Breite bzw. über die gesamte Länge eine überzeugende Glasoptik sowie eine ausreichende Farbkonstanz sichergestellt werden, der mehrschichtige Verbundkörper weist über seine Breite sowie über seine Länge eine nahezu konstante Wandstärke bzw. Planität auf, ohne das es hier zu Verzug des mehrschichtigen Verbundkörpers in eine Richtung kommt.

Es hat sich weiterhin überraschend herausgestellt, dass der mehrschichtige Verbundkörper in seinem Schichtaufbau und in der Wahl der Werkstoffe der jeweiligen Schichten der ersten und/oder der zweiten Verbundplatte so zur Verfügung gestellt werden kann, dass ein Verzug nahezu ausgeschlossen ist und das einerseits durch die Dimensionierung der Dicke der Schichten und / oder anderseits der sich durch die aus den Materialien ergebenden Längenausdehnungskoeffizient ein nahezu ebener mehrschichtiger Verbundkörper herstellbar ist, der insbesondere bei einer anschließenden Verwendung zur Herstellung einer Möbelbauplatte problemlos fixierbar und bearbeitbar durch bspw. sägen, bohren, fräsen und dgl. ist.

Die obere Schicht aus wenigstens einem (Meth)acrylatcopolymer, welche über ihre Dicke für sichtbares Licht einen Transmissionsgrad von mindestens 80 % gemessen nach ISO 13468-2 aufweist, ist weiterhin so ausgebildet, dass sie einen Haze von < 0,5 gemessen nach ASTM D 1003 sowie eine Brechungszahl mit einen Wert von etwa 1,4 bis 1,52 gemessen nach ISO 489 aufweist.
Bei dem mehrschichtigen Verbundkörper weist die obere Schicht der ersten Verbundplatte weiterhin wengistens ein (Meth)acrylatcopolymer auf, mit einem Schmelzindex von etwa 1,3 bis 1,8 g / 10 min. bei 3,8 kg und 230 °C gemessen nach ISO 1133.
Das (Meth)acrylatcopolymer ist weiterhin so ausgebildet, dass es vorteilhafterweise eine Glasübergangstemperatur von etwa 100 bis 105 °C gemessen nach ISO 306 sowie eine Glasübergangstemperatur von etwa 100 bis 116 °C gemessen nach ISO 11357 aufweist.

Die obere Schicht umfasst ein (Meth)acrylcopolymer bevorzugt PMMA. Optional kann die obere Schicht UV-Additive im Ausmaß von jeweils 0,01 bis 8 Gew.-% aufweisen. Dadurch werden die in der Zwischenschicht eingesetzten Werkstoffe und Farbmittel vor einer UV-Einstrahlung zusätzlich geschützt, wodurch die Farbstabilität über die Verwendungsdauer deutlich verbessert ist.
PMMA als Werkstoff für die obere Schicht gewährleistet neben der sehr guten UV-Beständigkeit auch eine sehr gute Kratz- und Chemikalienbeständigkeit sowie einen sehr hohen Oberflächenglanz.

Der mehrschichtige Verbundkörper weist eine Zwischenschicht auf aus wenigstens einem (Meth)acrylatcopolymer, enthaltend Pigmente und/oder Farbstoffe und ggf. Lichtschutzmittel, die aus einem mit der oberen Schicht identischen oder verschiedenen (Meth)acrylatcopolymer besteht mit einem Längenausdehnungskoeffizient von etwa 7 bis 9,5 x 10⁻⁵ K⁻¹, vorzugsweise 7 bis 9,5 x 10⁻⁵ K⁻¹, gemessen nach ISO 11359,

Der mehrschichtiger Verbundkörper zeichnet sich weiterhin dadurch aus, dass das (Meth)acrylatcopolymer der oberen Schicht und/oder der Zwischenschicht aus folgenden Einheiten bestehen:
a) 95 bis 5 Gew.-% Methylmethacrylat-Einheiten und ggf. 0 bis 40 Gew.-% weiteren vinylischen Monomereinheiten und
b) 5 bis 95 Gew.-% Estern der (Meth)acrylsäure, die folgende Reste in der Estergruppe aufweisen können:
   - Cycloalkyl- oder ein mehrfach alkylsubstituierter Cycloalkylrest mit 5 bis 12 C-Atomen, wobei die genannten Reste über Alkylengruppen mit 1 bis 6 C-Atomen, die auch verzweigt sein können, oder Oxyalkylengruppen mit 2 bis 4 C-Atomen an den (Meth)acrylsäurecarboxylrest gebunden sein können.

Der mehrschichtige Verbundkörper weist ebenfalls eine untere Schicht auf, enthaltend Pigmente und / oder Farbstoffe und ggf. Lichtschutzmittel sowie wenigstens ein Styrolpolymer, insbesondere Styrol-Copolymer.
Das Styrol-Copolymer kann dabei ein Acrylnitril-Butadien-Styrol (ABS) mit einem Schmelzindex von etwa 15 g / 10 min. bei 220 °C / 10 kg gemessen nach ISO 1133 sein und muss einen Wert der Verarbeitungsschwindung von 0,3 bis 0,7 % gemessen nach ISO 294-4 aufweisen. Die Formbeständigkeitstemperatur beträgt dabei etwa 100 °C gemessen nach ISO 75-2/A.
Das Styrol-Copolymer kann vorteilhafterweise auch ein Styrol-Acrylnitril (SAN) sein, mit einer Schmelzvolumenrate von etwa 10 cm³ / 10 min. bei 220 °C / 10 kg gemessen nach ISO 1133 und einer Verarbeitungsschwindung von etwa 0,3 bis 0,7 % gemessen nach ISO 294-4.

Der mehrschichtige Verbundkörper zeichnet sich weiterhin dadurch aus, dass er eine zweite Verbundplatte mit einer ersten Schicht aus wenigstens einem Styrolpolymer, insbesondere Styrolcopolymer mit einem Längenausdehnungskoeffizient von etwa 6,5 bis 9,5 x 10⁻⁵ K⁻¹, vorzugsweise 6,5 bis 9,5 x 10⁻⁵ K⁻¹, gemessen nach ISO 11359, einer zweiten Schicht aus wenigstens einem Styrolpolymer, insbesondere Styrolcopolymer oder wenigstens einem (Meth)acrylatcopolymer und/oder Mischungen aus diesen mit einem Längenausdehnungskoeffizient von etwa 6,5 bis 9,5 x 10⁻⁵ K⁻¹, vorzugsweise 6,5 bis 9,5 x 10⁻⁵ K⁻¹, gemessen nach ISO 11359, einer dritten Schicht aus wenigstens einem Styrolpolymer, insbesondere Styrolcopolymer mit einem Längenausdehnungskoeffizient von etwa 6,5 bis 9,5 x 10⁻⁵ K⁻¹, vorzugsweise 6,5 bis 9,5 x 10⁻⁵ K⁻¹, gemessen nach ISO 11359 oder wenigstens einem (Meth)acrylatcopolymer mit einem Längenausdehnungskoeffizient von etwa 7 bis 9,5 x 10^{- 5} K⁻¹, vorzugsweise 7 bis 9,5 x 10⁻⁵ K⁻¹, gemessen nach ISO 11359 aufweist.
Die zweite Verbundplatte ist in ihrer Dimensionierung, der Materialauswahl sowie der sich daraus ergebenden Längenausdehnungskoeffizient so vorteilhaft ausgebildet, dass der erfindungsgemäße mehrschichtige Verbundkörper sowohl oberseitig als auch unterseitig über eine herausragende Optik verfügt, ohne das es zu Verzug, zu Wellungen und sonstigen Deformationen kommt.
Der erfindungsgemäße mehrschichtige Verbundkörper zeichnet sich ebenfalls dadurch aus, dass zwischen der ersten Verbundplatte und der zweiten Verbundplatte über wenigstens eine Verbindungslage ein Trägerelement angeordnet ist, welches zu einer Stabilisierung des mehrschichtigen Verbundkörpers führt.
Die Verbindungslage zwischen der ersten Verbundplatte und / oder zweiten Verbundplatte und dem Trägerelement weist dabei wenigstens einen reaktiven Schmelzkleber auf Basis von Polyurethan (PUR) mit einer Auftragsmenge von etwa 30 bis 150 g / m², vorzugsweise 40 bis 80 g / m² auf. Der erfindungsgemäße mehrschichtige Verbundkörper in seinen komplexen Aufbau ist kostengünstig und wirtschaftlich herstellbar, vereint die Vorteile der einzelnen Schichten der ersten Verbundplatte sowie der zweiten Verbundplatte und vermeidet die Nachteile des bekannten Standes der Technik.

In einer weiteren vorteilhaften Ausgestaltung des mehrschichtigen Verbundkörpers weist die obere Schicht wenigstens eine Deckschicht mit einer Dicke von etwa 2 bis 60 µm, vorzugsweise 5 bis 30 µm auf. Diese Deckschicht verleiht dem mehrschichtigen Verbundkörper eine erhöhte Kratzbeständigkeit gemäß DIN EN 15186 sowie eine hohe chemische Beständigkeit gemäß DIN 68861 Teil 1.

Der erfindungsgemäße mehrschichtige Verbundkörper zeichnet sich weiterhin dadurch aus, dass die Deckschicht wenigstens ein Acrylpolymer umfasst sowie über ihre Dicke für sichtbares Licht einen Transmissionsgrad von mindestens 80 % gemessen nach ISO 3468-2 aufweist. Hierdurch lässt sich ein mehrschichtiger Verbundkörper zur Verfügung stellen, der eine Optik aufweist, die der einer teureren und schwerer zu bearbeitenden Glasscheibe entspricht und in Verbindung mit der Dicke bzw. der Werkstoffwahl der oberen Schicht eine noch bessere Glasoptik bringt.

Es hat sich weiterhin als vorteilhaft herausgestellt, dass der mehrschichtige Verbundkörper auf der oberen Schicht eine Deckschicht aufweist, die wenigstens ein Acrylpolymer umfasst sowie über ihre Dicke für sichtbares Licht einen Transmissionsgrad von maximal etwa 80 % gemessen nach ISO 13468-2 aufweist. Hierdurch lassen sich mehrschichtige Verbundkörper zur Verfügung stellen, deren Oberfläche nicht hochglänzend ist, sondern die Optik einer matten bzw. satinierten Glasscheibe aufweist.

Es hat sich weiterhin als vorteilhaft herausgestellt, dass beim erfindungsgemäßen mehrschichtigen Verbundkörper das Verhältnis der Dicke der oberen Schicht zur Dicke der Zwischenschicht wenigstens 5 beträgt. Hierdurch sind unterschiedliche Glasoptiken wirtschaftlich herstellbar, wobei die transparente Glasoptik der oberen Schicht durch die nicht transparente, farbige Zwischenschicht optisch ansprechend zur Geltung kommt.

Bei dem mehrschichtigen Verbundkörper wurde weiterhin vorteilhafterweise festgestellt, dass die untere Schicht eine Dicke von etwa 0,1 bis 1,5 mm, vorzugsweise 0,2 bis 1,0 mm aufweist. Hierdurch ist der mehrschichtige Verbundkörper je nach Dicke der oberen Schicht, der Zwischenschicht und der unteren Schicht nicht nur wirtschaftlich und kostengünstig herstellbar, sondern in seinen Oberflächenanforderungen optimal eingestellt und ohne Verzug des mehrschichtigen Aufbaus.

Es hat sich weiterhin als vorteilhaft herausgestellt, dass bei dem mehrschichtigen Verbundkörper die untere Schicht der ersten Verbundplatte und / oder die erste Schicht und / oder die zweite Schicht und / oder die dritte Schicht der zweiten Verbundplatte ein Blend von Acrylnitril-Butadien-Styrol-Copolymer (ABS) mit einem Anteil von etwa 10 bis 90 Gew.-% Styrol-Acrylnitril (SAN), vorzugsweise 20 bis 80 Gew.-% Styrol-Acrylnitril (SAN) aufweist.
In dieser vorteilhaften Ausgestaltung des mehrschichtigen Verbundkörpers ist dieser nicht nur wirtschaftlich und kostengünstig herstellbar, sondern weist nahezu keinen Verzug auf. Der mehrschichtige Verbundkörper ist durch die so dimensionierte und aufgebaute untere Schicht jederzeit wirtschaftlich und problemlos an beispielsweise Möbelbauplatten aus Holz, Holzwerkstoffen bzw. Holzersatzwerkstoffen fixierbar. Dieser Blend weist einen Längenausdehnungskoeffizient von etwa 6,5 bis 9,5 x 10⁻⁵ K⁻¹, vorzugsweise 6,5 bis 9,5 x 10⁻⁵ K⁻¹, gemessen nach ISO 11359 auf, sowie eine Verarbeitungsschwindung von etwa 0,3 bis 0,7 % gemessen nach ISO 294-4. Die Vicat-Erweichungstemperatur des Blendes liegt etwa bei 97 bis 107 °C gemessen nach ISO 306/B50, die Formbeständigkeitstemperatur liegt etwa bei 88 bis 100 °C (1,8 MPa - geglüht) gemessen nach ISO 75-2/A.

Ein weiterer wichtiger Vorteil des mehrschichtigen Verbundkörpers besteht darin, dass die zweite Schicht der zweiten Verbundplatte ein Recyklat und/oder ein Mahlgut und / oder ein Regranulat und / oder ein Regenerat aus wenigstens einem Styrolpolymer, insbesondere Styrol-Copolymer oder wenigstens einem (Meth)acrylcopolymer und / oder Mischungen aus diesen mit einem Längenausdehnungskoeffizient von etwa 6,5 bis 9,5 x 10⁻⁵ K⁻, vorzugsweise 6,5 bis 9,5 x 10⁻⁵ K⁻¹, gemessen nach ISO 11359 aufweist. Es werden in der zweiten Schicht der zweiten Verbundplatte im Sinne des werkstofflichen Kunststoff-Recyclings anfallende Materialien aus dem Koextrusionsprozess oder den Folgeprozessen in einer Menge von etwa 5 bis 95 Gew.-%, bevorzugt 10 bis 90 Gew.-% zugesetzt. Je nach Gehalt an Styrolpolymeren, Styrolcopolymeren bzw. (Meth)acrylcopolymer, ist es erfindungsgemäß möglich, Phasenvermittler oder Schlagzähmodifikatoren dieser Schicht zuzusetzen, um die mechanischen Eigenschaften der zweiten polymeren Verbundplatte zu verbessern.

In dieser äußerst vorteilhaften Ausgestaltung ist es möglich, dass aus der Herstellung der ersten Verbundplatte und / oder der zweiten Verbundplatte anfallende Material kostengünstig und wirtschaftlich sofort wieder einzusetzen, ohne das die mechanischen Eigenschaften der zweiten Verbundplatte bzw. des mehrschichtigen Verbundkörpers davon negativ beeinflusst sind.

Die Definition der Begriffe zum Recyklat, Mahlgut, Regranulat bzw. Regenerat ist wie folgt:
Recyklat ist ein Überbegriff, es handelt sich um eine Formmasse bzw. einen aufbereiteten Kunststoff mit definierten Eigenschaften. Ein Recyklat hat in seinem Werdegang im Allgemeinen bereits einen Verarbeitungsprozess hinter sich. Ein Masterbatch oder ein Blend, die aus mehreren Kunststoffen durch Aufbereiten, also durch einen Verarbeitungsprozess hergestellt wurden, gelten nicht als Recyklate.
Mahlgut wird durch Mahlen von Kunststoff gewonnen. Mahlgut hat unterschiedliche und unregelmäßige Teilchengrößen von 0,1 bis 5 mm.
Regranulat wird aus Mahlgut über einen Schmelzprozess als Granulat gewonnen. Regranulat hat eine gleichmäßige Korngröße und ist problemlos verarbeitbar. Regenerat wird über einen Schmelzprozess (Compoundieren) unter Zugabe von Zusätzen (Additiven) zur Eigenschaftsverbesserung gewonnen. Regenerat hat eine gleichmäßige Korngröße und definierte Eigenschaftswerte.

Die Definition der Begriffe zu Additiven ist wie folgt:
Zusätzlich können den einzelnen Schichten unterschiedliche Mengen an Gew.-% von Additiven zugesetzt sein wie z.B. UV-Absorber, UV-Stabilisatoren, Gleitmitteln, Oxidationsstabilisatoren, Flammschutzmittel, Synergisten, Farbmittel und / oder Füllstoffe.
Als Füllstoffe können beispielsweise eingesetzt werden Glimmer, Talkum, CalciumCarbonat, Wollastonit, Dolomit, Faser anorganischen Ursprungs wie beispielsweise Carbonfasern und / oder Glasfasern und dergleichen.

Ebenfalls vorteilhaft bei dem mehrschichtigen Verbundkörper ist, dass die zweite Schicht der zweiten Verbundplatte ein Recyklat und/oder ein Mahlgut und/oder ein Regranulat und/oder ein Regenerat aus wenigstens einem Styrolpolymer, insbesondere Styrolcopolymer oder wenigstens einem (Meth)acrylatcopolymer und/oder Mischungen aus diesen mit einem Längenausdehnungskoeffizient von etwa 5 bis 7 x 10⁻⁵ K⁻, vorzugsweise 5 bis 7 x 10⁻⁵ K⁻¹, gemessen nach ISO 11359 aufweist

Weiterhin ist der mehrschichtiger Verbundkörper so ausgestaltet, dass die zweite Schicht der zweiten Verbundplatte einem Recyklat und/oder ein Mahlgut und/oder einem Regranulat und/oder einem Regenerat aus einen Blend von Acrylnitril-Butadien-Styrol-Copolymer (ABS) mit einem Anteil von etwa 5 bis 40 Gew.-% Styrol-Acrylnitril (SAN), vorzugsweise 10 bis 20 Gew.-% Styrol-Acrylnitril (SAN) mit einem Gesamtanteil von etwa 10 bis 40 Gew.-% und wenigstens ein (Meth)acrylatcopolymer mit einem Gesamtanteil von etwa 60 bis 90 Gew.-% aufweist.

Der mehrschichtiger Verbundkörper ist vorteilhafterweise so ausgebildet, dass die zweite Schicht der zweiten Verbundplatte einen Blend von Acrylnitril-Butadien-Styrol-Copolymer (ABS) mit einem Anteil von etwa 5 bis 40 Gew.-% Styrol-Acrylnitril (SAN), vorzugsweise 10 bis 20 Gew.-% Styrol-Acrylnitril (SAN) mit eine Gesamtanteil von etwa 10 bis 40 Gew.-% und wenigstens einem (Meth)acrylatcopolymer mit einem Gesamtanteil von etwa 60 bis 90 Gew.-% aufweist.

Ein ebenfalls wichtiger Vorteil des mehrschichtigen Verbundkörpers besteht darin, dass das Trägerelement aus Holz, Holzwerkstoffen, Holzersatzstoffen, polymeren Werkstoffen, metallischen Werkstoffen, keramischen Werkstoffen, Glas, Papier und dergleichen ausgebildet ist. Hierdurch sind mehrschichtige Verbundkörper mit unterschiedlichsten Eigenschaften kostengünstig herstellbar.

Weiterhin vorteilhaft wird gesehen, dass bei dem mehrschichtigen Verbundkörper die Dicke der ersten Verbundplatte und / oder die Dicke der zweiten Verbundplatte etwa 1 bis 6 mm, vorzugsweise 1 bis 4 mm beträgt.

Ein weiterer wichtiger Vorteil des mehrschichtigen Verbundkörpers besteht darin, dass das Verhältnis von Längenausdehnungskoeffizient der oberen Schicht zum Längenausdehnungskoeffizient der unteren Schicht etwa 0,8 bis 1,2 ist. Hierdurch können mehrschichtige Verbundkörper zur Verfügung gestellt werden, die sich sowohl wirtschaftlich als auch kostengünstig herstellen lassen, die aber auch während bzw. nach ihrer Herstellung nahezu keinen Verzug über ihre Breite bzw. über ihre Länge aufweisen. Dies ist einerseits durch die Wahl der Dicke der oberen Schicht und / oder der unteren Schicht und/oder andererseits durch die Wahl des Längenausdehnungskoeffizient des Werkstoffes der oberen Schicht und / oder unteren Schicht möglich.

Durch die Wahl der Werkstoffe für die Schichten der ersten Verbundplatte und/oder der zweiten Verbundplatte sowie der Begrenzung/ Dimensionierung vom Längenausdehnungskoeffizient gemessen nach ISO 13468-2 ist es somit überraschend möglich, mehrschichtige Verbundkörper zur Verfügung zu stellen, die wirtschaftlich sowie kostengünstig herstellbar sind und die erstmals eine Kombination der Vorteile der Schichten der Verbundplatten unter Ausschluss der Nachteile des Standes der Technik ermöglichen.

Der mehrschichtige Verbundkörper soll und anhand eines Ausführungsbeispiels, welches die Erfindung nicht einschränkt, näher beschrieben werden.

Es zeigt:

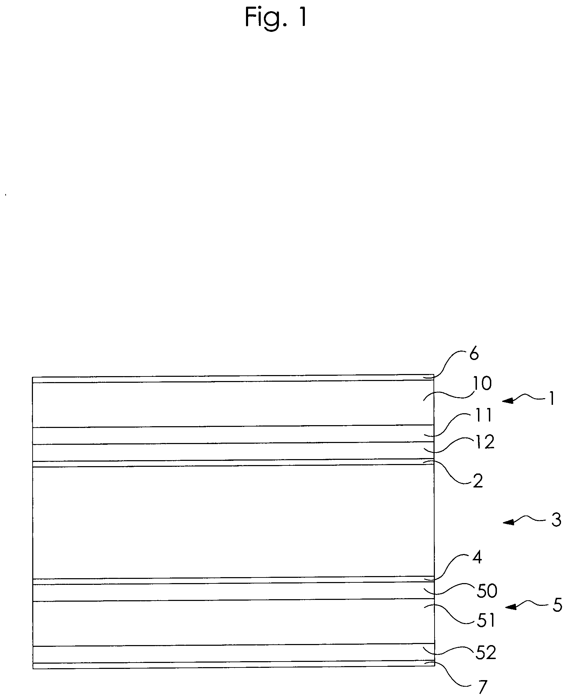

- Fig. 1: erfindungsgemäßer mehrschichtiger Verbundkörper

In der Fig. 1 ist der mehrschichtige Verbundkörper dargestellt, umfassend eine erste Verbundplatte 1 mit einer oberen Schicht 10, einer Zwischenschicht 11, einer unteren Schicht 12 sowie eine an der oberen Schicht 10 angeordneten Deckschicht 6; einer zweiten Verbundplatte 5 mit einer ersten Schicht 50, einer zweiten Schicht 51 sowie einer dritten Schicht 52.
Der mehrschichtige Verbundkörper weist weiterhin einen zwischen der ersten Verbundplatte 1 und der zweiten Verbundplatte 5 über wenigstens eine Verbindungslage 2, 4 angeordnetes Trägerelement 3 auf, wobei die Verbindungslage 2, 4 wenigstens einen reaktiven Schmelzkleber auf Basis von Polyurethan (PUR) mit einer Auftragsmenge von etwa 30 bis 150 g/m², vorzugsweise 40 bis 80 g/m² aufweist.

Die obere Schicht 10 besteht aus einem (Meth)acrylatcopolymer, in diesem Ausführungsbeispiel aus einem Polymethylmethacrylat (PMMA), welches aus folgenden Einheiten besteht:
a) 95 bis 5 Gew.-% Methylmethacrylat-Einheiten und ggf. 0 bis 40 Gew.-% weiteren vinylischen Monomereinheiten und
b) 5 bis 95 Gew.-% Estern der (Meth)acrylsäure, die folgende Reste in der Estergruppe aufweisen können:
   - Cycloalkyl- oder ein mehrfach alkylsubstituierter Cycloalkylrest mit 5 bis 12 C-Atomen, wobei die genannten Reste über Alkylengruppen mit 1 bis 6 C-Atomen, die auch verzweigt sein können, oder Oxyalkylengruppen mit 2 bis 4 C-Atomen an den (Meth)acrylsäurecarboxylrest gebunden sein können.

Der Werkstoff der oberen Schicht 10 weist über die Dicke von etwa 2 mm für sichtbares Licht einen Transmissionsgrad von 90 % gemessen nach ISO 3468-2 und einen Längenausdehnungskoeffizient von etwa 8 x 10⁻⁵ K⁻¹ gemessen nach ISO 11359 auf.

Die Zwischenschicht 11 besteht ebenfalls aus einem (Meth)acrylatcopolymer mit den folgenden Einheiten
a) 95 bis 5 Gew.-% Methylmethacrylat-Einheiten und ggf. 0 bis 40 Gew.-% weiteren vinylischen Monomereinheiten und
b) 5 bis 95 Gew.-% Estern der (Meth)acrylsäure, die folgende Reste in der Estergruppe aufweisen können:
   - Cycloalkyl- oder ein mehrfach alkylsubstituierter Cycloalkylrest mit 5 bis 12 C-Atomen, wobei die genannten Reste über Alkylengruppen mit 1 bis 6 C-Atomen, die auch verzweigt sein können, oder Oxyalkylengruppen mit 2 bis 4 C-Atomen an den (Meth)acrylsäurecarboxylrest gebunden sein können.

Die Zwischenschicht 11 enthält weiterhin Pigmente und / oder Farbstoffe und ggf. Lichtschutzmittel in einer Menge von etwa 1 bis 20, vorzugsweise 2 bis 15 Gew.-%, welche die Optik des mehrschichtigen Verbundkörpers definieren. Die Zwischenschicht 11 ist in diesem Ausführungsbeispiel aus dem identischen (Meth)acrylatcopolymer hergestellt mit einem Längenausdehnungskoeffizient von etwa 8 x 10⁻⁵ K⁻¹ gemessen nach ISO 11359.

Es liegt auch im Rahmen der Erfindung, dass die Zwischenschicht 11 wenigstens ein (Meth)acrylatcopolymer aufweist, welches zum (Meth)acrylatcopolymer der oberen Schicht 10 verschieden ist und welches aus den folgenden Einheiten besteht:
a) 95 bis 5 Gew.-% Methylmethacrylat-Einheiten und ggf. 0 bis 40 Gew.-% weiteren vinylischen Monomereinheiten und
b) 5 bis 95 Gew.-% Estern der (Meth)acrylsäure, die folgende Reste in der Estergruppe aufweisen können:
   - Cycloalkyl- oder ein mehrfach alkylsubstituierter Cycloalkylrest mit 5 bis 12 C-Atomen, wobei die genannten Reste über Alkylengruppen mit 1 bis 6 C-Atomen, die auch verzweigt sein können, oder Oxyalkylengruppen mit 2 bis 4 C-Atomen an den (Meth)acrylsäurecarboxylrest gebunden sein können.

Die erste Verbundplatte 1 weist weiterhin eine an der Zwischenschicht 11 angeordnete untere Schicht 12 auf enthaltend Pigmente und / oder Farbstoffe und ggf. Lichtschutzmittel in einer Menge von etwa 1 bis 20, vorzugsweise 2 bis 15 Gew.-%, sowie wenigstens ein Styrol-Polymer, insbesondere Styrol-Copolymer, mit einem Längenausdehnungskoeffizient von etwa 6,5 bis 9,5 x 10⁻⁵ K⁻¹, vorzugsweise 6,5 bis 9,5 x 10⁻⁵ K⁻¹, gemessen nach ISO 11359. In diesem Ausführungsbeispiel weist die untere Schicht 12 einen Blend von Acrylnitril-Butadien-Styrol-Copolymer (ABS) mit einem Anteil von 50 Gew.-% Styrol-Acrylnitril (SAN) auf.

Die erste Verbundplatte 1 weist eine Gesamtdicke von etwa 2,5 mm auf und das Material der ersten Verbundplatte 1 einen Längenausdehnungskoeffizient von etwa 6 bis 6,3 x 10⁻⁵ K⁻¹, vorzugsweise 6 bis 6,3 x 10⁻⁵ K¹, gemessen nach ISO 11359.

Die erste Verbundplatte 1 wird dabei im an sich bekannten Koextrusionsverfahren hergestellt. Das Material der ersten Verbundplatte 1 weist einen Längenausdehnungskoeffizient in Extrusionsrichtung von etwa 6,3 bis 6,7 x 10⁻⁵ K⁻¹, vorzugsweise 6,3 bis 6,7 x 10⁻⁵ K⁻¹, gemessen nach ISO 11359 auf, sowie einen Längenausdehnungskoeffizient orthogonal zur Extrusionsrichtung von etwa 6 bis 6,3 x 10⁻⁵ K⁻¹ vorzugsweise 6 bis 6,3 x 10⁻⁵ K⁻¹, gemessen nach ISO 11359 auf.

An der der unteren Schicht 12 gegenüberliegenden Seite der oberen Schicht 10 der ersten Verbundplatte 1 ist eine Deckschicht 6 angeordnet. Diese Deckschicht 6 weist eine Dicke von etwa 10 µm auf, umfassend wenigstens ein Acrylpolymer sowie über ihre Dicke von 10 µm für sichtbares Licht einen Transmissionsgrad von etwa 92 % gemessen nach ISO 13468-2. Die Deckschicht 6 weist somit einen größeren Transmissionsgrad gemessen nach ISO 13468-2 auf als die darunter angeordnete obere Schicht 10 der ersten Verbundplatte 1. Dies führt vorteilhafterweise zu einer noch besseren Glasoptik des erfindungsgemäßen mehrschichtigen Verbundkörpers.

Es liegt jedoch auch im Rahmen der Erfindung, dass die auf der oberen Schicht 10 der ersten Verbundplatte 1 angeordnete Deckschicht 6 eine Dicke von etwa 15 µm aufweist und ein Acrylpolymer umfasst, welches der Deckschicht 6 über ihre Dicke für sichtbares Licht einen Transmissionsgrad von etwa 65 % gemessen nach ISO 13468-2 verleiht, so dass der mehrschichtige Verbundkörper an seiner Oberseite eine matte bzw. satinierte Glasoptik aufweist.

An der ersten Verbundplatte 1 ist über eine Verbindungslage 2, welche in diesem Ausführungsbeispiel als reaktiver PUR-Klebstoff mit einer Auftragsmenge von 80 g/m² ausgebildet ist, das Trägerelement 3 stoffschlüssig und vollflächig fixiert.

Das Trägerelement 3 ist aus Holzwerkstoffen hergestellt und kann bspw. als Spanplatte, als sogenannte MDF-Platte (mitteldichte Faserplatte) bzw. als HDF-Platte (hochdichte Faserplatte) ausgebildet sein. Das Trägerelement 3 in diesem Ausführungsbeispiel ist eine MDF-Platte mit einer Dicke von etwa 14 mm.

An der der ersten Verbundplatte 1 gegenüberliegenden Seite des Trägerelements 3 ist die zweite Verbundplatte 5 angeordnet.
Die zweite Verbundplatte 5 ist über die Verbindungslage 4, welche in diesem Ausführungsbeispiel als reaktiver PUR-Klebstoff mit einer Auftragsmenge von 80 g/m² ausgebildet ist, stoffschlüssig und vollflächig mit dem Trägerelement 3 verbunden.

Die zweite Verbundplatte 5 weist eine erste Schicht 50 aus einem Styrol-Copolymer auf, welches in diesem Ausführungsbeispiel ein Blend von Acrylnitril-Butadien-Styrol-Copolymer (ABS) mit einem Anteil von etwa 50 Gew.-% Styrol-Acrylnitril (SAN) ist mit einem Längenausdehnungskoeffizient von etwa 6,5 bis 9,5 x 10⁻⁵ K⁻¹, vorzugsweise 6,5 bis 9,5 x 10⁻⁵ K⁻¹, gemessen nach ISO 11359.

An der ersten Schicht 50 der zweiten Verbundplatte 5 ist die zweite Schicht 51 angeordnet, welche in diesem Ausführungsbeispiel aus einem Styrol-Copolymer und einem (Meth)acrylatcopolymer besteht.
Das Styrol-Copolymer ist in diesem Ausführungsbeispiel ein Blend von Acrylnitril-Butadien-Styrol-Copolymer (ABS) mit einem Anteil von etwa 50 Gew.-% Styrol-Acrylnitril (SAN) und mit einem Gesamtanteil von etwa 20 Gew.-% und einem (Meth)acrylatcopolymer, in diesem Ausführungsbeispiel Polymethylmethacrylat (PMMA) mit einem Gesamtanteil von etwa 80 Gew.-%.

Die zweite Schicht 51 der zweiten Verbundplatte 5 ist in diesem Ausführungsbeispiel so ausgebildet, dass sie aus einem Recyklat aus einem Styrol-Copolymer mit etwa 20 Gew.-% und einem (Meth)acrylatcopolymer mit 80 Gew.-% hergestellt ist mit einem Längenausdehnungskoeffizient von etwa 6 bis 6,7 x 10⁻⁵ K⁻¹, vorzugsweise 6 bis 6,7 x 10⁻⁵ K⁻¹, gemessen nach ISO 11359.
Der Werkstoff der zweiten Schicht 51 der zweiten polymeren Verbundplatte 5 weist eine Rohdichte von etwa 1,16 kg / dcm³ gemessen nach DIN EN 323, eine Härte Shore D von etwa 91 gemessen nach DIN ISO 7619-1 und eine Vicat-Erweichungstemperatur von etwa 99 °C gemessen nach DIN EN ISO 306 (Verfahren B50) auf.

An der zweiten Schicht 51 der zweiten polymeren Verbundplatte 5 ist eine dritte Schicht 52 angeordnet, welche aus einem Styrol-Copolymer mit einem Längenausdehnungskoeffizient von etwa 6,5 bis 9,5 10⁻⁵ K⁻¹, vorzugsweise 6,5 bis 9,5 x 10⁻⁵ K⁻¹, gemessen nach ISO 11359 aufweist.
Es liegt jedoch auch im Rahmen der Erfindung, dass die dritte Schicht 52 der zweiten polymeren Verbundplatte 5 wenigstens ein (Meth)acrylatcopolymer aufweist.

An der dritten Schicht 52 der zweiten Verbundplatte 5 kann bei Bedarf eine Deckschicht 7 angeordnet sein, welche die dritte Schicht 52 vollflächig überdeckt und wenigstens ein Acryl-Polymer umfasst, welches durch geeignete UV-Absorber bzw. UV-Stabilisatoren verstärkt ist.

Die zweite Verbundplatte 5 weist in diesem Ausführungsbeispiel eine Gesamtdicke von etwa 2,5 mm auf und das Material der zweiten Verbundplatte 5 einen Längenausdehnungskoeffizient in Extrusionsrichtung von etwa 6,3 x 10⁻⁵ K⁻¹ gemessen nach ISO 11359 auf, sowie einen Längenausdehnungskoeffizient orthogonal zur Extrusionsrichtung von etwa 6 x 10⁻⁵ K⁻¹ gemessen nach ISO 11359 auf.
Dabei ist die erste Schicht 50 sowie die dritte Schicht 52 in diesem Ausführungsbeispiel mit einer etwa gleichen Dicke von etwa 0,4 mm ausgebildet, während die dazwischen angeordnete zweite Schicht 51 eine Dicke von etwa 1,7 mm aufweist.

Die erste Schicht 50 und / oder die zweite Schicht 51 und / oder die dritte Schicht 52 der zweiten polymeren Verbundplatte 5 enthalten Pigmente und / oder Farbstoffe und ggf. Lichtschutzmittel in einer Menge von etwa 0,1 bis 20 Gew.-%.

Der mehrschichtige Verbundkörper ist in diesem Ausführungsbeispiel so ausgebildet, dass das Verhältnis der Dicke zur oberen Schicht 10 zur Zwischenschicht 11 etwa 10 beträgt. Die Dicke der Zwischenschicht 10 beträgt etwa 0,2 mm.

Durch dieses vorteilhafte Dickenverhältnis der beiden Schichten 10, 11 ist ein erfindungsgemäßer mehrschichtiger Verbundkörper wirtschaftlich und kostengünstig herstellbar, der eine exzellente Glasoptik an seiner Oberfläche und eine gute Farbkonstanz bzw. Farbbrillanz der Zwischenschicht aufweist.

Die erste Verbundplatte 1 ist weiterhin so ausgebildet, dass die untere Schicht 12 in diesem Ausführungsbeispiel eine Dicke von etwa 0,3 mm aufweist. Durch die Wahl des Werkstoffes bzw. der Dicke der oberen Schicht 10, der Zwischenschicht 11 sowie der unteren Schicht 12 lässt sich ein nahezu verzugsfreier mehrschichtiger Verbundkörper kostengünstig und wirtschaftlich herstellen, der über seine gesamte Oberfläche nahezu verzugsfrei ist.

Der mehrschichtige Verbundkörper ist in diesem Ausführungsbeispiel weiterhin so ausgebildet, dass das Verhältnis der Dicke der oberen Schicht 10 zur Dicke der Zwischenschicht 11 und er unteren Schicht 12 wenigstens 2 beträgt.

Bei dem mehrschichtigen Verbundkörper hat sich weiterhin als sehr vorteilhaft herausgestellt, dass das Verhältnis des Längenausdehnungskoeffizient des Materials der ersten Verbundplatte 1 zum Längenausdehnungskoeffizient des Materials der zweiten Verbundplatte 5 etwa 0,8 bis 1,2 gemessen nach ISO 11359 ist. In diesem Ausführungsbeispiel ist das Verhältnis der Längenausdehnungskoeffizienten etwa 1 x 10⁻⁵ K⁻¹, da hierdurch der mehrschichtige Verbundkörper im an sich bekannten Koextrusionsverfahren kostengünstig und wirtschaftlich herstellbar ist und sowohl während als auch nach der Herstellung nahezu ohne Verzug zur Verfügung stellbar ist.

Der erfindungsgemäße mehrschichtige Verbundkörper zeichnet sich weiterhin dadurch aus, dass die obere Schicht 10 und / oder die Zwischenschicht 11 und / oder die untere Schicht 12 der ersten Verbundplatte 1 sowie die ersten Schicht 50 und/oder die zweite Schicht 51 und/oder die dritte Schicht 53 der zweiten Verbundplatte 5 eine Verarbeitungsschwindung von etwa 0,3 bis 0,7 % gemessen nach ISO 294-4 aufweisen, so dass der mehrschichtige Verbundkörper erstmals nicht nur wirtschaftlich und kostengünstig herstellbar, sondern auch nahezu verzugsfrei für den Einsatz bspw. in der Möbelindustrie zur Verfügung stellbar ist. Dabei ist eine industrielle Verarbeitbarkeit insbesondere dadurch gegeben, dass der mehrschichtige Verbundkörper als Platte in Größen von etwa 1300 mm x 2800 mm zur Verfügung stellbar ist.

## Patentansprüche

1. Mehrschichtiger Verbundkörper umfassend:
- eine erste Verbundplatte (1) mit
• einer oberen Schicht (10), aus wenigstens einem (Meth)acrylatcopolymer, welches einen Längenausdehnungskoeffizient von etwa 7 bis 9,5 x 10⁻⁵ K⁻¹ gemessen nach ISO 11359 aufweist,
• einer Zwischenschicht (11) aus wenigstens einem (Meth)acrylatcopolymer, enthaltend Pigmente und/oder Farbstoffe ggf. Lichtschutzmittel, welches einen Längenausdehnungskoeffizient von etwa 7 bis 9,5 x 10⁻⁵ K⁻¹ gemessen nach ISO 11359 aufweist,
• einer unteren Schicht (12) umfassend wenigstens ein Styrolpolymer, insbesondere Styrolcopolymer mit einem Längenausdehnungskoeffizient von etwa 6,5 bis 9,5 x 10⁻⁵ K⁻¹ gemessen nach ISO 11359
wobei die erste Verbundplatte (1) eine Gesamtdicke von wenigstens 1 mm und das Material der ersten Verbundplatte (1) einen Längenausdehnungskoeffizient von etwa 5 bis 7 x 10⁻⁵ K⁻¹ gemessen nach ISO 11359 aufweist.
- eine zweite Verbundplatte (5) mit
• einer ersten Schicht (50) aus wenigstens einem Styrolpolymer, insbesondere Styrolcopolymer mit einem Längenausdehnungskoeffizient von etwa 6,5 bis 9,5 x 10⁻⁵ K⁻¹ gemessen nach ISO 11359,
• einer zweiten Schicht (51) aus wenigstens einem Styrolpolymer, insbesondere Styrolcopolymer oder wenigstens einem (Meth)acrylatcopolymer und/oder Mischungen aus diesen mit einem Längenausdehnungskoeffizient von etwa 6,5 bis 9,5 x 10⁻⁵ K⁻¹ gemessen nach ISO 11359,
• einer dritten Schicht (52) aus wenigstens einem Styrolpolymer, insbesondere Styrolcopolymer mit einem Längenausdehnungskoeffizient von etwa 6,5 bis 9,5 x 10⁻⁵ K⁻¹ gemessen nach ISO 11359 oder wenigstens einem (Meth)acrylatcopolymer mit einem Längenausdehnungskoeffizient von etwa 7 bis 9,5 x 10⁻⁵ K⁻¹ gemessen nach ISO 11359
wobei die zweite Verbundplatte (5) eine Gesamtdicke von wenigstens 1 mm und das Material der zweiten Verbundplatte (2) einen Längenausdehnungskoeffizient von etwa 5 bis 7 x 10⁻⁵ K⁻¹ gemessen nach ISO 11359 aufweist.
- einem zwischen der ersten Verbundplatte (1) und der zweiten Verbundplatte (5) über wenigstens eine Verbindungslage (2, 4) angeordneten Trägerelement (3),
- wobei die Verbindungslage (2, 4) wenigstens einen reaktiven Schmelzkleber auf Basis von Polyurethan (PUR) mit einer Auftragsmenge von etwa 30 bis 150 g/m², vorzugsweise 40 bis 80 g/m² aufweist.

2. Mehrschichtiger Verbundkörper nach Anspruch 1, **dadurch gekennzeichnet, dass** die obere Schicht (10) der ersten Verbundplatte (1) über ihre Dicke für sichtbares Licht einen Transmissionsgrad von mindestens 80 % gemessen nach ISO 13468-2 aufweist.

3. Mehrschichtiger Verbundkörper nach einem der vorhergehenden Ansprüche, **dadurch gekennzeichnet, dass** die obere Schicht (10) der ersten Verbundplatte (1) und / oder die untere Schicht (52) der zweiten Verbundplatte (5) wenigstens eine Deckschicht (6, 7) mit einer Dicke von etwa 2 bis 60 µm vorzugsweise 5 bis 30 µm aufweist.

4. Mehrschichtiger Verbundkörper nach Anspruch 3, **dadurch gekennzeichnet, dass** die Deckschicht (6) der ersten Verbundplatte (1) wenigstens ein Acrylpolymer umfasst sowie über ihre Dicke für sichtbares Licht einen Transmissionsgrad von mindestens 80 % gemessen nach ISO 13468-2 aufweist.

5. Mehrschichtiger Verbundkörper nach Anspruch 3, **dadurch gekennzeichnet, dass** die Deckschicht (6) der ersten Verbundplatte (1) wenigstens ein Acrylpolymer umfasst sowie über ihre Dicke für sichtbares Licht einen Transmissionsgrad von maximal etwa 80 % gemessen nach ISO 13468-2 aufweist.

6. Mehrschichtiger Verbundkörper nach einem der vorhergehenden Ansprüche, **dadurch gekennzeichnet, dass** das Verhältnis der Dicke der ersten Verbundplatte (1) zur Dicke der zweiten Verbundplatte (5) etwa 1 bis 1,5 beträgt.

7. Mehrschichtiger Verbundkörper nach einem der vorhergehenden Ansprüche, **dadurch gekennzeichnet, dass** die zweite Schicht (51) der zweiten Verbundplatte (5) ein Recyklat und/oder ein Mahlgut und/oder ein Regranulat und/oder ein Regenerat aus wenigstens einem Styrolpolymer, insbesondere Styrolcopolymer oder wenigstens einem (Meth)acrylatcopolymer und/oder Mischungen aus diesen mit einem Längenausdehnungskoeffizient von etwa 5 bis 7 x 10⁻⁵ K⁻¹ gemessen nach ISO 11359 aufweist.

8. Mehrschichtiger Verbundkörper nach einem der vorhergehenden Ansprüche, **dadurch gekennzeichnet, dass** die untere Schicht (12) der ersten Verbundplatte (1) und / oder die erste Schicht (50) und / oder die dritte Schicht (52) der zweiten Verbundplatte (5) einen Blend von Acrylnitril-Butadien-Styrol-Copolymer (ABS) mit einem Anteil von etwa 10 bis 90 Gew.-% Styrol-Acrylnitril (SAN), vorzugsweise 20 bis 80 Gew.-% Styrol-Acrylnitril (SAN) aufweist.

9. Mehrschichtiger Verbundkörper nach einem der vorhergehenden Ansprüche, **dadurch gekennzeichnet, dass** die zweite Schicht (51) der zweiten Verbundplatte (5) einen Blend von Acrylnitril-Butadien-Styrol-Copolymer (ABS) mit einem Anteil von etwa 5 bis 40 Gew.-% Styrol-Acrylnitril (SAN), vorzugsweise 10 bis 20 Gew.-% Styrol-Acrylnitril (SAN), mit einem Gesamtanteil von etwa 10 bis 40 Gew.-% und wenigstens einem (Meth)acrylatcopolymer mit einen Gesamtanteil von etwa 60 bis 90 Gew.-% aufweist.

10. Mehrschichtiger Verbundkörper nach einem der vorhergehenden Ansprüche, **dadurch gekennzeichnet, dass** die zweite Schicht (51) der zweiten Verbundplatte (5) ein Recyklat und/oder ein Mahlgut und/oder ein Regranulat und/oder ein Regenerat aus einen Blend von Acrylnitril-Butadien-Styrol-Copolymer (ABS) mit einem Anteil von etwa 5 bis 40 Gew.-% Styrol-Acrylnitril (SAN), vorzugsweise 10 bis 20 Gew.-% Styrol-Acrylnitril (SAN), mit einem Gesamtanteil von etwa 10 bis 40 Gew.-% und wenigstens einem (Meth)acrylatcopolymer mit einen Gesamtanteil von etwa 60 bis 90 Gew.-% aufweist.

11. Mehrschichtiger Verbundkörper nach einem der vorhergehenden Ansprüche, **dadurch gekennzeichnet, dass** das Trägerelement (3) aus Holz, Holzwerkstoffen, Holzersatzstoffen, polymeren Werkstoffen, metallischen Werkstoffen, keramischen Werkstoffen, Glas, Papier und dergleichen ausgebildet ist.

12. Mehrschichtiger Verbundkörper nach einem der vorhergehenden Ansprüche, **dadurch gekennzeichnet, dass** die Dicke der ersten Verbundplatte (1) und / oder die Dicke der zweiten Verbundplatte (5) etwa 1 bis 6 mm, vorzugsweise 1 bis 4 mm beträgt.

## Claims

1. Multilayer composite, comprising:
- a first composite panel (1) comprising
• an upper layer (10) consisting of at least one (meth)acrylate copolymer that has a coefficient of linear thermal expansion of approximately 7 to 9.5 x 10⁻⁵ K⁻¹, measured in accordance with ISO 11359,
• an intermediate layer (11) consisting of at least one (meth)acrylate copolymer that contains pigments and/or colourants and optionally UV absorbers, and that has a coefficient of linear thermal expansion of approximately 7 to 9.5 x 10⁻⁵ K⁻¹, measured in accordance with ISO 11359,
• a lower layer (12) comprising at least one styrene polymer, in particular styrene copolymer, that has a coefficient of linear thermal expansion of approximately 6.5 to 9.5 x 10⁻⁵ K⁻¹, measured in accordance with ISO 11359,
wherein the first composite panel (1) has an overall thickness of at least 1 mm and the material of the first composite panel (1) has a coefficient of linear thermal expansion of approximately 5 to 7 x 10⁻⁵ K⁻¹, measured in accordance with ISO 11359,
- a second composite panel (5) comprising
• a first layer (50) consisting of at least one styrene polymer, in particular styrene copolymer, that has a coefficient of linear thermal expansion of approximately 6.5 to 9.5 x 10⁻⁵ K⁻¹, measured in accordance with ISO 11359,
• a second layer (51) consisting of at least one styrene polymer, in particular styrene copolymer, or at least one (meth)acrylate copolymer, and/or mixtures thereof, that has a coefficient of linear thermal expansion of approximately 6.5 to 9.5 x 10⁻⁵ K⁻¹, measured in accordance with ISO 11359,
• a third layer (52) consisting of at least one styrene polymer, in particular styrene copolymer, that has a coefficient of linear thermal expansion of approximately 6.5 to 9.5 x 10⁻⁵ K⁻¹, measured in accordance with ISO 11359, or at least one (meth)acrylate copolymer that has a coefficient of linear thermal expansion of approximately 7 to 9.5 x 10⁻⁵ K⁻¹, measured in accordance with ISO 11359,
wherein the second composite panel (5) has an overall thickness of at least 1 mm and the material of the second composite panel (2) has a coefficient of linear thermal expansion of approximately 5 to 7 x 10⁻⁵ K⁻¹, measured in accordance with ISO 11359,
- a support element (3) that is arranged between the first composite panel (1) and the second composite panel (5) and above at least one connection layer (2, 4),
- wherein the connection layer (2, 4) comprises at least one polyurethane (PUR)-based reactive hot melt adhesive having an application quantity of from approximately 30 to 150 g/m², preferably 40 to 80 g/m².

2. Multilayer composite according to claim 1, **characterised in that** the upper layer (10) of the first composite panel (1) has a transmittance for visible light of at least 80%, measured in accordance with ISO 13468-2, over the thickness thereof.

3. Multilayer composite according to either of the preceding claims, **characterised in that** the upper layer (10) of the first composite panel (1) and/or the lower layer (52) of the second composite panel (5) comprises at least one cover layer (6, 7) having a thickness of from approximately 2 to 60 µm, preferably 5 to 30 µm.

4. Multilayer composite according to claim 3, **characterised in that** the cover layer (6) of the first composite panel (1) comprises at least one acrylic polymer and has a transmittance for visible light of at least 80%, measured in accordance with ISO 13468-2, over the thickness thereof.

5. Multilayer composite according to claim 3, **characterised in that** the cover layer (6) of the first composite panel (1) comprises at least one acrylic polymer and has a transmittance for visible light of at most approximately 80%, measured in accordance with ISO 13468-2, over the thickness thereof.

6. Multilayer composite according to any of the preceding claims, **characterised in that** the ratio of the thickness of the first composite panel (1) to the thickness of the second composite panel (5) is approximately 1 to 1.5.

7. Multilayer composite according to any of the preceding claims, **characterised in that** the second layer (51) of the second composite panel (5) comprises a recyclate and/or grist and/or a regranulate and/or a regranulate consisting of at least one styrene polymer, in particular styrene copolymer, or at least one (meth)acrylate copolymer, and/or mixtures thereof, that has a coefficient of linear thermal expansion of approximately 5 to 7 x 10⁻⁵ K⁻¹, measured in accordance with ISO 11359.

8. Multilayer composite according to any of the preceding claims, **characterised in that** the lower layer (12) of the first composite panel (1) and/or the first layer (50) and/or the third layer (52) of the second composite panel (5) comprises a blend of acrylonitrile butadiene styrene copolymer (ABS) having a proportion of from approximately 10 to 90 wt.% styrene acrylonitrile (SAN), preferably 20 to 80 wt.% styrene acrylonitrile (SAN).

9. Multilayer composite according to any of the preceding claims, **characterised in that** the second layer (51) of the second composite panel (5) comprises a blend of acrylonitrile butadiene styrene copolymer (ABS) having a proportion of from approximately 5 to 40 wt.% styrene acrylonitrile (SAN), preferably 10 to 20 wt.% styrene acrylonitrile (SAN), at a total proportion of from approximately 10 to 40 wt.%, and at least one (meth)acrylate copolymer at a total proportion of from approximately 60 to 90 wt.%.

10. Multilayer composite according to any of the preceding claims, **characterised in that** the second layer (51) of the second composite panel (5) comprises a recyclate and/or grist and/or a regranulate and/or a regranulate consisting of a blend of acrylonitrile butadiene styrene copolymer (ABS) having a proportion of from approximately 5 to 40 wt.% styrene acrylonitrile (SAN), preferably 10 to 20 wt.% styrene acrylonitrile (SAN), at a total proportion of from approximately 10 to 40 wt.%, and at least one (meth)acrylate copolymer at a total proportion of from approximately 60 to 90 wt.%.

11. Multilayer composite according to any of the preceding claims, **characterised in that** the support element (3) is formed of wood, wood materials, wood substitutes, polymer materials, metal materials, ceramic materials, glass, paper and the like.

12. Multilayer composite according to any of the preceding claims, **characterised in that** the thickness of the first composite panel (1) and/or the thickness of the second composite panel (5) is approximately 1 to 6 mm, preferably 1 to 4 mm.

## Revendications

1. Corps composite multicouche, comprenant :
- une première plaque composite (1) avec
• une couche supérieure (10) composée d'au moins un copolymère de (méth)acrylates, lequel présente un coefficient de dilatation longitudinale d'environ 7 à 9,5 x 10⁻⁵ K⁻¹ mesuré selon la norme ISO 11359,
• une couche intermédiaire (11) composée d'au moins un copolymère de (méth)acrylates contenant des pigments et/ou des colorants, éventuellement des moyens de protection contre la lumière, lequel présente un coefficient de dilatation longitudinale d'environ 7 à 9,5 x 10⁻⁵ K⁻¹ mesuré selon la norme ISO 11359,
• une couche inférieure (12) comprenant au moins un polymère styrénique, en particulier un copolymère styrénique avec un coefficient de dilatation longitudinale d'environ 6,5 à 9,5 x 10⁻⁵ K⁻¹ mesuré selon la norme ISO 11359,
dans lequel la première plaque composite (1) présente une épaisseur totale d'au moins 1 mm et le matériau de la première plaque composite (1) présente un coefficient de dilatation longitudinale d'environ 5 à 7 x 10⁻⁵ K⁻¹ mesuré selon la norme ISO 11359
- une deuxième plaque composite (5) avec
• une première couche (50) composée d'au moins un polymère styrénique, en particulier copolymère styrénique avec un coefficient de dilatation longitudinale d'environ 6,5 à 9,5 x 10⁻⁵ K⁻¹ mesuré selon la norme ISO 11359 ;
• une deuxième couche (51) composée d'au moins un polymère styrénique, en particulier de copolymère styrénique ou d'au moins un copolymère de (méth)acrylates et/ou des mélanges de ces derniers avec un coefficient de dilatation longitudinale d'environ 6,5 à 9,5 x 10⁻⁵ K⁻¹ mesuré selon la norme ISO 11359,
• une troisième couche (52) composée d'au moins un polymère styrénique, en particulier d'un copolymère styrénique avec un coefficient de dilatation longitudinale d'environ 6,5 à 9,5 x 10⁻⁵ K⁻¹ mesuré selon la norme ISO 11359 ou d'au moins un copolymère de (méth)acrylates avec un coefficient de dilatation longitudinale d'environ 7 à 9,5 x 10⁻⁵ K⁻¹ mesuré selon la norme ISO 11359,
dans lequel la deuxième plaque composite (5) présente une épaisseur totale d'au moins 1 mm et le matériau de la deuxième plaque composite (2) présente un coefficient de dilatation longitudinale d'environ 5 à 7 x 10⁻⁵ K⁻¹ mesuré selon la norme ISO 11359,
- un élément de support (3) disposé entre la première plaque composite (1) et la deuxième plaque composite (5) sur au moins une strate de liaison (2, 4),
- dans lequel la strate de liaison (2, 4) présente au moins une colle thermofusible réactive à base de polyuréthane (PUR) avec une quantité d'application d'environ 30 à 150 g/m², de préférence 40 à 80 g/m².

2. Corps composite multicouche selon la revendication 1, **caractérisé en ce que** la couche supérieure (10) de la première plaque de liaison (1) présente sur son épaisseur pour de la lumière visible un degré de transmission d'au moins 80 % mesuré selon la norme ISO 13468-2.

3. Corps composite multicouche selon l'une quelconque des revendications précédentes, **caractérisé en ce que** la couche supérieure (10) de la première plaque de liaison (1) et/ou la couche inférieure (52) de la deuxième plaque de liaison (5) présentent au moins une couche de recouvrement (6, 7) avec une épaisseur d'environ 2 à 60 µm, de préférence 5 à 30 µm.

4. Corps composite multicouche selon la revendication 3, **caractérisé en ce que** la couche de recouvrement (6) de la première plaque composite (1) comprend au moins un polymère acrylique et présente également sur son épaisseur pour de la lumière visible un degré de transmission d'au moins 80 % mesuré selon la norme ISO 13468-2.

5. Corps composite multicouche selon la revendication 3, **caractérisé en ce que** la couche de recouvrement (6) de la première plaque composite (1) comprend au moins un polymère acrylique et présente également sur son épaisseur pour de la lumière visible un degré de transmission de maximum environ 80 % mesuré selon la norme ISO 13468-2.

6. Corps composite multicouche selon l'une quelconque des revendications précédentes, **caractérisé en ce que** le rapport entre l'épaisseur de la première plaque composite (1) et l'épaisseur de la deuxième plaque composite (5) est d'environ 1 à 1,5.

7. Corps composite multicouche selon l'une quelconque des revendications précédentes, **caractérisé en ce que** la deuxième couche (51) de la deuxième plaque de liaison (5) présente un produit recyclé et/ou un produit broyé et/ou des regranulés et/ou un produit régénéré composés d'au moins un polymère styrénique, en particulier d'un copolymère styrénique ou d'au moins un copolymère de (méth)acrylates et/ou de mélanges de ces derniers avec un coefficient de dilatation longitudinale d'environ 5 à 7 x 10⁻⁵ K⁻¹ mesuré selon la norme ISO 11359.

8. Corps composite multicouche selon l'une quelconque des revendications précédentes, **caractérisé en ce que** la couche inférieure (12) de la première plaque composite (1) et/ou la première couche (50) et/ou la troisième couche (52) de la deuxième plaque composite (5) présentent un mélange de copolymères acrylonitrile/butadiène/styrène (ABS) avec une fraction d'environ 10 à 90 % en poids de styrène/acrylonitrile (SAN), de préférence de 20 à 80 % en poids de styrène/acrylonitrile (SAN).

9. Corps composite multicouche selon l'une quelconque des revendications précédentes, **caractérisé en ce que** la deuxième couche (51) de la deuxième plaque composite (5) présente un mélange de copolymères acrylonitrile/butadiène/styrène (ABS) avec une fraction d'environ 5 à 40 % en poids de styrène/acrylonitrile (SAN), de préférence 10 à 20 % en poids de styrène/acrylonitrile (SAN), avec une fraction totale d'environ 10 à 40 % en poids et d'au moins un copolymère de (méth)acrylates avec une fraction totale d'environ 60 à 90 % en poids.

10. Corps composite multicouche selon l'une quelconque des revendications précédentes, **caractérisé en ce que** la deuxième couche (51) de la deuxième plaque composite (5) présente un produit recyclé et/ou un produit broyé et/ou des regranulés et/ou un produit régénéré composés d'un mélange de copolymères acrylonitrile/butadiène/styrène (ABS) avec une fraction d'environ 5 à 40 % en poids de styrène/acrylonitrile (SAN), de préférence 10 à 20 % en poids de styrène/acrylonitrile (SAN), avec une fraction totale d'environ 10 à 40 % en poids et d'au moins un copolymère de (méth)acrylates avec une fraction totale d'environ 60 à 90 % en poids.

11. Corps composite multicouche selon l'une quelconque des revendications précédentes, **caractérisé en ce que** l'élément de support (3) est réalisé à partir de bois, de matériaux dérivés du bois, de matériaux de substitution du bois, de matériaux polymères, de matériaux métalliques, de matériaux céramiques, de verre, de papier et similaires.

12. Corps composite multicouche selon l'une quelconque des revendications précédentes, **caractérisé en ce que** l'épaisseur de la première plaque composite (1) et/ou l'épaisseur de la deuxième plaque composite (5) sont d'environ 1 à 6 mm, de préférence de 1 à 4 mm.
